# EUROPÄISCHE PATENTSCHRIFT

(11) **EP 1 319 174 B1**
(45) Veröffentlichungstag und Bekanntmachung des Hinweises auf die Patenterteilung: **19.05.2004**
(21) Anmeldenummer: 01931369.1
(22) Anmeldetag: 15.03.2001
(51) Int. Cl.: G01K 11/32, G01D 5/353

(54) **ANORDNUNG AUS ELEKTRONISCHEN BAUELEMENTEN MIT TEMPERATURSENSOR**
ASSEMBLY CONSISTING OF ELECTRONIC COMPONENTS AND COMPRISING A TEMPERATURE SENSOR
DISPOSITIF CONSTITUE DE COMPOSANTS ELECTRONIQUES COMPORTANT UN CAPTEUR DE TEMPERATURE

(30) Priorität: 23.03.2000 DE 10014377
(43) Veröffentlichungstag der Anmeldung: 18.06.2003
(73) Patentinhaber: eupec Europäische Gesellschaft für Leistungshalbleiter mbH, 58581 Warstein (DE)
(72) Erfinder: SÖLKNER, Gerald, 85521 Ottobrunn (DE)
(74) Vertreter: Bickel, Michael
(86) Internationale Anmeldenummer: PCT/DE2001/001008
(87) Internationale Veröffentlichungsnummer: WO 2001/071301

(56) Entgegenhaltungen:
- DE-A- 4 123 870
- US-A- 5 401 956
- US-A- 5 410 404
- US-A- 5 805 403
- MEASURES R M ET AL: "WAVELENGTH DEMODULATED BRAGG GRATING FIBER OPTIC SENSING SYSTEM FOR ADDRESSING SMART STRUCTURE CRITICAL ISSUES" SMART MATERIALS AND STRUCTURES,GB,IOP PUBLISHING LTD., BRISTOL, Bd. 1, Nr. 1, 1. März 1992 (1992-03-01), Seiten 36-44, XP000399871 ISSN: 0964-1726

## Beschreibung

Die Erfindung betrifft eine Anordnung aus elektronischen Bauelementen, die auf einem gemeinsamen Trägerkörper gehaltert sind.

Aufgabe der Erfindung ist es, eine Anordnung der genannten Art bereitzustellen, bei der ohne wesentlichen baulichen Eingriff in eine vorgegebene Struktur der Anordnung eine Temperaturüberwachung der elektronischen Bauelemente während deren Betriebs und individuell für jedes einzelne Bauelement ermöglicht ist.

Diese Aufgabe wird durch die Merkmale des Anspruchs 1 gelöst.

Gemäß dieser Lösung weist die Anordnung aus elektronischen Bauelementen, die auf einem Trägerkörper gehaltert sind,
- einen optischen Leiter auf,
   - der zwei oder mehrere optische Bragg-Gitter mit voneinander verschiedenen gitterspezifischen Bragg-Wellenlängen aufweist, deren jedes so nahe bei je einem zugeordneten der Halbleiterbauelemente angeordnet ist, dass an diesem Bragg-Gitter eine im Wesentlichen nur von diesem zugeordneten Bauelement bestimmte Temperatur herrscht,
   - der ein Ende zum Einkoppeln einer die verschiedenen gitterspezifischen Bragg-Wellenlängen dieser Bragg-Gitter enthaltenden optischen Strahlung in den optischen Leiter aufweist, die nach dem Einkoppeln im optischen Leiter zu diesen Gittern geführt ist, und
   - der ein Ende zum Auskoppeln jeder von einem der Gitter kommenden und im optischen Leiter geführten optischen Strahlung aufweist.

Die erfindungsgemäße Anordnung kann prinzipiell jede Art elektronischer Bauelemente aufweisen. Vorzugsweise weist die erfindungsgemäße Anordnung Bauelemente in Form von Halbleiterbauelementen auf.

Die optische Strahlung, welche die verschiedenen gitterspezifischen Bragg-Wellenlängen der Bragg-Gitter enthält, kann von einer breitbandigen Lichtquelle erzeugt sein, deren Strahlung mehrere, insbesondere alle gitterspezifischen Bragg-Wellenlängen gleichzeitig enthält und/oder von einer schmalbandigen durchstimmbaren Lichtquelle, deren variable Wellenlänge mehrere, insbesondere alle gitterspezifischen Bragg-Wellenlängen zeitlich nacheinander durchläuft.

Eine besonders vorteilhafte Ausgestaltung der erfindungsgemäßen Anordnung weist zumindest ein elektronisches Bauelement in Form eines Leistungshalbleiter-Bauelements auf, das beispielsweise eine Diode und/oder einen IGBT und/oder einen Thyristor usw. aufweisen und in Form eines Halbleiterchips vorliegen kann. Insbesondere kann diese Ausgestaltung ein Leistungsmodul oder ein Modul in einem Umrichter sein, wobei der Vorteil besteht, dass eine auf verschiedene Bauelemente des Moduls verteilte Temperaturmessung während des Einsatzes des Moduls durchgeführt werden kann, gleichgültig ob dieser Einsatz beispielsweise in einem sich bewegenden Fahrzeug oder stationär stattfindet.

Generell kann eine erfindungsgemäße Anordnung ein einziges Modul, das zwei oder mehrere auf einem gemeinsamen Trägerkörper gehalterte elektronische Bauelemente aufweist, oder ein aus zumindest zwei Modulen bestehendes System sein. Bei einem solchen System können beispielsweise alle Module auf einem gemeinsamen, insbesondere einen Kühlkörper aufweisenden Trägerkörper angeordnet und befestigt sein oder alle einzelnen Module auf je einem separaten Trägerkörper oder ein oder mehrere einzelne Module und/oder Gruppen aus jeweils zwei oder mehreren Modulen auf je einem separaten Trägerkörper angeordnet und befestigt sein. Jeder separate Trägerkörper kann je einen Kühlkörper aufweisen. Bei einem System aus Modulen kann speziell ein einzelnes Modul auch nur ein einziges elektronisches Bauelement aufweisen.

Insbesondere besteht der Vorteil, dass zwei oder mehrere erfindungsgemäße Anordnungen durch Aneinanderschaltung der optischen Leiter der verschiedenen Anordnungen parallelisierbar und/oder kaskadierbar sind, wodurch die verteilte Temperaturmessung auf sehr einfache und bequeme Weise erweiterbar ist. Beispielsweise können einzelne Module, insbesondere Leistungsmodule und/oder Systeme aus solchen Modulen parallelisiert und/oder kaskadiert werden.

Ein elektromagnetisches Übersprechen auf die Temperaturmessung durch hohe elektrische und/oder magnetische Felder während des Betriebs einer erfindungsgemäßen Anordnung ist ausgeschlossen. Dies gilt insbesondere auch für eine erfindungsgemäße Anordnung, die Leistungsmodule aufweist.

Die Zuverlässigkeit der elektronischen Bauelemente wird durch den optischen Leiter und die Bragg-Gitter nicht beeinträchtigt, es entsteht dadurch kein zusätzlicher Räum- oder Kühlungsbedarf.

Die Erfindung ermöglicht zum Beispiel eine zeitaufgelöste Überwachung einzelner Chiptemperaturen in einem Leistungsmodul während des Betriebs im Feld und eine Detektion von Normabweichungen, nach der gegebenenfalls ein Modul rechtzeitig vor einem Ausfall ausgetauscht werden kann. Normabweichungen können beispielsweise durch Kühlungsprobleme, die z.B. durch eine Schwächung einer Verbindung zwischen einem Bauelement und dem Trägerkörper und/oder dem Trägerkörper und einem Kühlkörper verursacht sein können, eine unzureichende Kühlerauslegung usw. hervorgerufen sein.

Der optische Leiter der erfindungsgemäßen Anordnung ist vorzugsweise ein Wellenleiter. Dieser Wellenleiter kann ein Monomodewellenleiter oder ein Multimodewellenleiter sein.

Vorteilhafterweise ist der optische Leiter eine Faser, bei der beispielsweise ein Vorteil in ihrer Biegsamkeit liegt, ein anderer darin, dass die verteilte Temperaturmessung durch Aneinanderschaltung der Sensor-Glasfasern mit standardmäßigen Fasersteckern parallelisierbar und kaskadierbar ist.

Ein Bragg-Gitter ist vorzugs- und vorteilhafterweise in den optischen Leiter integriert. Solche integrierten Gitter können beispielsweise und bekanntermaßen durch Einschreiben in den Leiter mit Hilfe eines Laserstrahls und/oder eines optischen Interferenzmusters hergestellt werden und sind im Leiter durch einen sich in Ausbreitungsrichtung einer optischen Strahlung im Leiter periodisch ändernden Brechungsindex gekennzeichnet. Es kann jedoch auch jedes auf andere Art hergestellte integrierte Gitter verwendet werden, beispielsweise ein in den Leiter eingeprägtes reliefartiges Gitter.

Ein Bragg-Gitter muß nicht notwendig im optischen Leiter integriert sein. Beispielsweise kann das Gitter in einem gesonderten Stück aus transparentem Material ausgebildet sein, das in den unterbrochenen Leiter eingesetzt ist.

Der optische Leiter ist vorzugs- und vorteilhafterweise in einer mit den Bauelementen und/oder dem Trägerkörper verbundenen Vergussmasse eingebettet. Dabei kann vorteilhafterweise eine Vergussmasse verwendet werden in welche üblicherweise die Bauelemente sowieso eingebettet werden. Gerade hier zeigt sich besonders deutlich, wie minimal der bauliche Eingriff in die vorgegebene Struktur einer herkömmlichen Anordnung ist, der notwendig ist, um von dieser herkömmlichen Anordnung zur erfindungsgemäßen Anordnung zu gelangen.

An das Ende des Leiters, das zum Auskoppeln einer von jedem der Gitter kommenden und im optischen Leiter geführten optischen Strahlung dient, ist vorteilhafterweise eine Einrichtung zur Messung der in dieser Strahlung enthaltenen gitterspezifischen Bragg-Wellenlänge jedes Gitters ankoppelbar.

Die gitterspezifische Bragg-Wellenlänge ist eine Funktion der Temperatur des Gitters und damit ein Maß für die Temperatur des diesem Gitter zugeordneten Bauelements. Ist der optische Leiter eine Faser, kann die Einrichtung auf einfache Weise durch einen Faserstecker angeschlossen werden.

Die von jedem Bragg-Gitter kommende optische Strahlung kann eine von jedem Gitter reflektierte Strahlung oder eine durch jedes Gitter hindurchgegangene Strahlung sein. Vorzugsweise wird ausschließlich die jedem Gitter reflektierte Strahlung zur Messung verwendet, wobei das Ende zum Einkoppeln optischer Strahlung in den optischen Leiter zugleich als Ende zum Auskoppeln der von jedem Gittern kommenden Strahlung dieses Leiter verwendet werden kann.

Die Einrichtung zur Messung der gitterspezifischen Bragg-Wellenlängen kann Teil einer Messgerät-Hardware sein, die als Spin-Off, der Datenübertragung kostengünstig und tragbar ist. Damit ist mit geringem Aufwand eine Möglichkeit der Bauteileüberwachung im Betrieb geschaffen, die wiederum zu einer markanten Erhöhung der Zuverlässigkeit von Leistungssystemen führt.

Bei einer erfindungsgemäßen Anordnungen liegt die mögliche Zahl einzelner optischer Leiter in der Größenordnung von 100, so dass auch in umfangreichen Anordnungen, beispielsweise in umfangreichen Systemen aus Modulen Temperaturüberwachungen durchgeführt werden können.

Es sind Temperaturauflösungen um 1 K und Zeitkonstanten von 1 bis 10 ms für die Temperaturmessung möglich.

Eine erfindungsgemäße Anordnung aus elektronischen Bauelementen, die auf einem Trägerkörper gehaltert sind, kann, vorteilhafterweise auch so ausgebildet sein, dass diese Anordnung
- einen optischen Leiter aufweist,
   - der zumindest ein Paar optischer Bragg-Gitter mit je einer gitterspezifischen Bragg-Wellenlänge und mit einer so großen optischen Länge des Leiters zwischen diesem Paar Gitter aufweist, dass die Laufzeit einer sich im Leiter von einem Gitter des Paares zum anderen Gitter des Paares ausbreitenden optischen Strahlung messbar ist, wobei
   - jedes Gitter jedes Paares so nahe bei je einem zugeordneten elektronischen Bauelement angeordnet ist, dass an diesem Gitter eine im Wesentlichen nur von diesem zugeordneten Bauelement bestimmte Temperatur herrscht, wobei
- der Leiter
   - ein Ende zum Einkoppeln einer die gitterspezifische Bragg-Wellenlänge jedes Bragg-Gitters jedes Paares enthaltenden optischen Strahlung in den optischen Leiter aufweist, die nach dem Einkoppeln im optischen Leiter zu jedem der Gitter geführt ist, und
   - ein Ende zum Auskoppeln einer von jedem Gitter jedes Paares kommenden und im optischen Leiter geführten optischen Strahlung aufweist.

Die Gitter jedes solchen Paares können vorteilhafterweise dadurch voneinander unterschieden werden, dass eine laufzeitbedingte Verzögerung eines von einem Gitter des Paares kommenden und im optischen Leiter geführten Strahlungsanteils gegenüber einem vom anderen Gitter des Paares kommenden und im optischen Leiter geführten Strahlungsanteils gemessen wird. Diese Verzögerung ist gleich der erwähnten Laufzeit und damit messbar.

Da die Gitter eines solchen Paares durch die gemessene Verzögerung voneinander zu unterscheiden sind, können die gitterspezifischen Bragg-Wellenlängen dieser Gitter vorteilhafterweise zueinander gleich sein. Dies gilt für jedes derartige Paar Gitter.

Mehrere derartige Paare Gitter lassen sich dadurch voneinander unterscheiden, dass verschiedenen Paaren verschiedene Laufzeiten und/oder verschiedene gitterspezifische Bragg-Wellenlängen zugeordnet sind.

In jedem Fall besteht der Vorteil, dass die benötigte Zahl voneinander verschiedener gitterspezifischer Bragg-Wellenlängen stark reduziert wird, im Extremfall auf nur eine Bragg-Wellenlänge.

Um die erwähnte Verzögerung messen zu können, ist eine bevorzugte und vorteilhafte Ausgestaltung der erfindungsgemäßen Anordnung so ausgebildet, dass an das Ende des optischen Leiters, das zum Auskoppeln einer von jedem der Gitter dieses Leiters kommenden und in diesem optischen Leiter geführten optischen Strahlung dient, eine Einrichtung zur Messung der Verzögerung eines von einem Gitter des Paares kommenden und im optischen Leiter geführten Strahlungsanteils gegenüber einem vom anderen Gitter des Paares kommenden und im optischen Leiter geführten Strahlungsanteils ankoppelbar ist. Der von jedem Gitter eines Paares kommende Strahlungsanteil ist durch die gitterspezifische Bragg-Wellenlänge dieses Gitters eindeutig gekennzeichnet.

Die Erfindung wird in der nachfolgenden Beschreibung anhand der Figuren beispielhaft näher erläutert. Es zeigen:
- Figur 1: einen längs der Schnittlinie I-I in Figur 3 genommenen vertikalen Schnitt durch ein Beispiel der erfindungsgemäßen Anordnung,
- Figur 2a: die Filtercharakteristik der Bragg-Gitter in Bezug auf eine von den Bragg-Gittern reflektierte optische Strahlung,
- Figur 2b: zum Vergleich die Filtercharakteristik der Bragg-Gitter in Bezug auf eine durch die Bragg-Gitter hindurchgegangene optische Strahlung, und
- Figur 3: in Draufsicht beispielhafte eine erfindungsgemäße Anordnung in Form eines Systems aus mehreren Modulen, die in Bezug auf einen optischen Leiter kaskadiert sind,
- Figur 4: in Draufsicht eine beispielhafte erfindungsgemäße Anordnung in Form eines Systems aus mehreren Modulen, bei dem Module in Bezug auf einen optischen Leiter parallel geschaltet sind, und
- Figur 5: in Draufsicht eine beispielhafte erfindungsgemäße Anordnung mit einem optischen Leiter, der ein Paar optische Bragg-Gitter mit jeweils einer so großen optischen Länge des Leiters zwischen dem Paar Gitter aufweist, dass die Laufzeit einer sich in diesem Leiter zwischen diesem Paar Gitter ausbreitenden optischen Strahlung messbar ist.

Die Figuren sind schematisch und nicht maßstäblich.

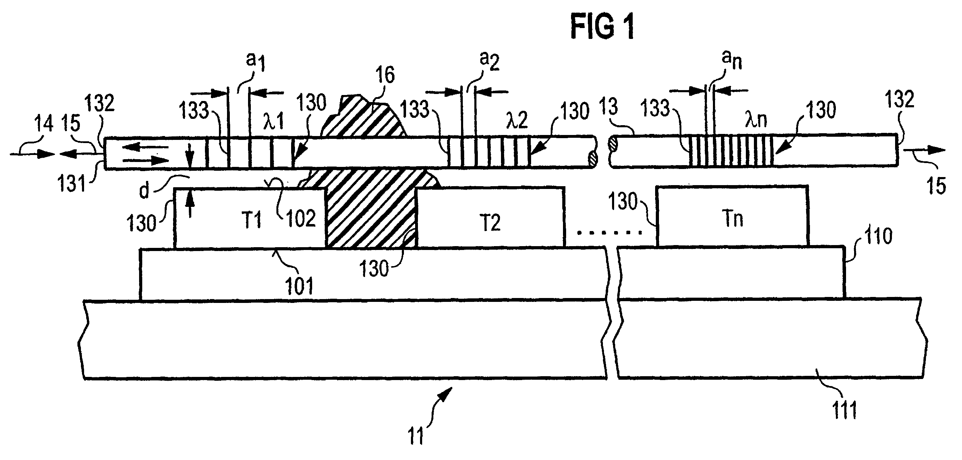

Bei der in der Figur 1 dargestellten Anordnung 1 aus elektronischen Bauelementen 10 sind beispielsweise n solcher Bauelemente 10 in einer Reihe nebeneinander auf einem gemeinsamen Trägerkörper 11 gehaltert angeordnet, wobei n eine weitgehend beliebige natürliche Zahl ist. Es sei aber darauf hingewiesen, dass die Anordnung der Bauelemente 10 auf dem Trägerkörper 11 nicht auf diese Reihenanordnung beschränkt ist, sondern dass in der Praxis auch andere Anordnungen vorkommen, beispielsweise eine Anordnung 1, bei der die Bauelemente 10 in Richtung vertikal zur Zeichenebene der Figur 1 zueinander versetzt sind.

Beispielsweise ist die Anordnung 1 ein Leistungsmodul, bei dem die elektronischen Bauelemente 10 Leistungshalbleiter-Bauelemente sind, z.B. Thyristoren, IGBTs(= Insulated Gate Bipolar Transistors), Dioden usw., die beispielsweise in Form von Chips, die vorzugsweise Silizium aufweisen, ausgebildet sind.

Der Trägerkörper 11 dieses Leistungsmoduls 1 weist ein Substrat 110 aus elektrisch isolierendem Material, beispielsweise aus einer Keramik wie z.B. Aluminiumoxid und/oder Aluminiumnitrid und einen Kühlkörper 111 aus gut wärmeleitendem Material, z.B. Kupfer oder AlSiC, auf, auf dem das Substrat 110 befestigt ist.

Die Anordnung 1 weist erfindungsgemäß einen optischen Leiter 13 auf, der im Beispielfall n optische Bragg-Gitter 130 mit voneinander verschiedenen gitterspezifischen Bragg-Wellenlängen aufweist, deren jedes so nahe bei je einem zugeordneten der n Bauelemente 10 angeordnet ist, dass an diesem Bragg-Gitter 130 eine im Wesentlichen nur von diesem zugeordneten Bauelement 10 bestimmte Temperatur herrscht.

Beispielsweise arbeite jedes der n Bauelement 10 im Normalbetrieb bei je einer Betriebstemperatur T1, T2, ...bzw. Tn, die auch an dem diesem Bauelement 10 zugeordneten Bragg-Gitter 130 herrsche. Die Betriebstemperaturen T1, T2, ..., Tn der verschiedenen Bauelemente 10 können untereinander gleich und/oder verschieden voneinander sein.

Bekanntermaßen ist die gitterspezifische Bragg-Wellenlänge eines Bragg-Gitters temperaturabhängig. Bei der Betriebstemperatur T1, T2, ...bzw. Tn jedes Bauelements 10 im Normalbetrieb sei die gitterspezifische Bragg-Wellenlänge des diesem Bauelement 10 zugeordneten Bragg-Gitters 130 gleich λ1, λ2, ... bzw. λn. Wichtig ist, dass die Bragg-Wellenlängen λ1, λ2, ... , λn der den verschiedenen Bauelementen 10 zugeordneten Gitter 130 voneinander verschieden sind, d.h. dass λ1 ≠ λ2 ≠ ... ≠ λn gilt.

Die gitterspezifische Bragg-Wellenlänge λ1, λ2, ... bzw. λn jedes Gitters 130 ist durch eine gitterindividuell gewählte Gitterkonstante a₁, a₂, ...bzw. an dieses Gitters 130 bestimmt, die durch den Abstand zwischen jeweils benachbarten Gitterlinien 133 des Gitters 130 gegeben ist. Um eine gitterspezifische Bragg-Wellenlänge λ1, λ2, ... bzw. λn zu erhalten, die von Gitter 130 zu Gitter 130 verschieden ist, ist lediglich die Gitterkonstante a₁, a₂, ...bzw. an jedes Gitters 130 von Gitter 130 zu Gitter 130 verschieden zu wählen.

Der optische Leiter 13, auf dem die Bragg-Gitter 130 ausgebildet sind, weist ein Ende 131 zum Einkoppeln einer die verschiedenen gitterspezifischen Bragg-Wellenlängen λ1, λ2,..., λn dieser Bragg-Gitter 130 enthaltenden optischen Strahlung 14 in den optischen Leiter 13 auf, die nach dem Einkoppeln in den Leiter 13 im Leiter 13 zu diesen Gittern 130 geführt ist.

Die optische Strahlung 14 kann von einer nicht dargestellten Lichtquelle erzeugt sein, deren Strahlung breitbandig ist und gleichzeitig mehrere, insbesondere alle gitterspezifischen Bragg-Wellenlängen λ1, λ2, ... , λn gleichzeitig enthält und/oder von einer nicht dargestellten schmalbandigen durchstimmbaren Lichtquelle, deren variable Wellenlänge mehrere, insbesondere alle gitterspezifischen Bragg-Wellenlängen λ1, λ2, ... , λn zeitlich nacheinander durchläuft.

Der optische Leiter 13 weist außerdem ein Ende 132 zum Auskoppeln einer von jedem der Gitter 130 kommenden und im optischen Leiter 13 geführten optischen Strahlung 15 auf.

Ein von einem Gitter 130 kommender und im optischen Leiter 13 geführter Strahlungsanteil der zugeführten optischen Strahlung 14 kann eine vom Gitter 130 reflektierter Strahlungsanteil dieser Strahlung 14 oder ein durch dieses Gitter 130 hindurchgegangener Strahlungsanteil der Strahlung 14 sein.

Jeder von einem Gitter 130 reflektierte Strahlungsanteil wird im optischen Leiter 13 zu dessen Ende 131 zum Einkoppeln geführt und an diesem Ende 131 ausgekoppelt. Dieses Ende 131 ist in diesem Reflexionsfall zugleich das Ende 132 zum Auskoppeln der von jedem Gitter 130 kommenden Strahlung 15, die sich aus den von jedem Gitter 130 reflektierten Strahlungsanteilen zusammensetzt.

Jeder durch ein Gitter 130 hindurchgegangene Strahlungsanteil wird im optischen Leiter 13 zu einem Ende des Leiters 13 geführt und dort ausgekoppelt, das dem Ende 131 zum Einkoppeln entgegengesetzt ist. In diesem Durchgangsfall ist das entgegengesetzte Ende des Leiters 13 das Ende 132 zum Auskoppeln der von jedem Gitter 130 dieses Leiters 13 kommenden Strahlung 15 aus dem Leiter 13, die sich in diesem Fall aus den durch jedes Gitter 130 hindurchgegangenen Strahlungsanteilen zusammensetzt.

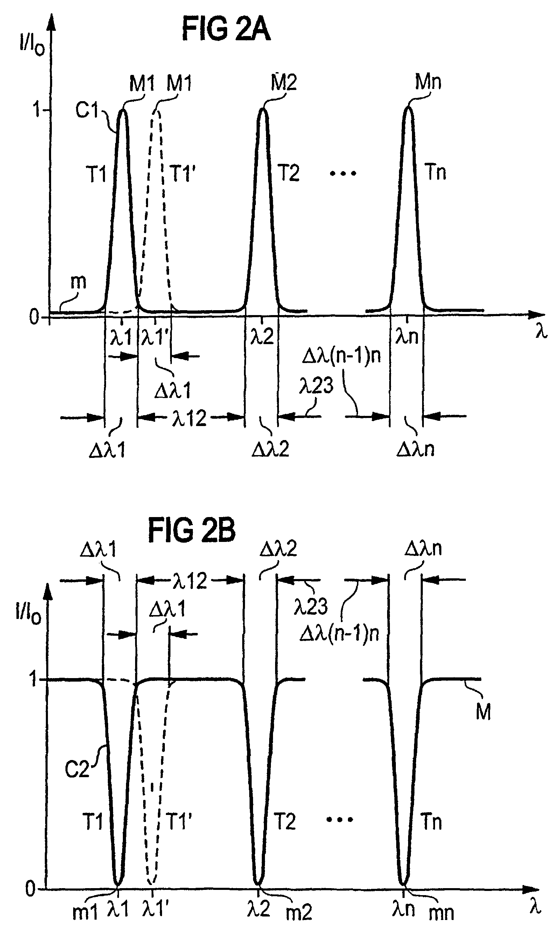

Die Bragg-Gitter 130 weisen für die zugeführte optische Strahlung 14 im Reflexionsfall gemeinsam die in der Figur 2a qualitativ dargestellte Filtercharakteristik C1 und im Durchgangsfall die in der Figur 2b qualitativ dargestellte Filtercharakteristik C2 auf.

In den Figuren 2a und 2b ist jeweils auf der Ordinate das Intensitätsverhältnis bzw. optische Leistungsverhältnis I/I0 in Abhängigkeit von der auf der Abszisse aufgetragenen optischen Wellenlänge λ dargestellt, wobei I/I0 angibt, welcher Anteil I der Intensität I0 der zugeführten optische Strahlung 14 bei einer bestimmten optischen Wellenlänge λ von den Bragg-Gittern 130 kommt.

Gemäß der Figur 2a weist die Filtercharakteristik C1 der Gitter 130 für den Reflexionsfall bei der gitterspezifischen Bragg-Wellenlänge λ1, λ2, ... bzw. λn jedes Gitters 130 je ein Maximum M1, M2, ... bzw. Mn auf, links und rechts von dem die Filtercharakteristik C1 innerhalb je eines schmalen Wellenlängenbereichs Δλ1, Δλ2 ... bzw. Δλn auf einen minimalen Wert m abfällt. Insofern kann die Filtercharakteristik C1 als schmalbandig bezeichnet werden.

Die Maxima M1, M2, ... bzw. Mn und schmalen Wellenlängenbereiche Δλ1, Δλ2 ..., Δλn der Filtercharakteristik C1 können in Abhängigkeit von der jeweiligen Beschaffenheit der einzelnen Gitter 130 zueinander gleich und/oder voneinander verschieden sein.

Die gitterspezifischen Bragg-Wellenlängen λ1, λ2, ... λn sollten derart voneinander verschieden sein, dass jeweils benachbarte schmale Wellenlängenbereiche Δλ1 und Δλ2, Δλ2 und Δλ3... bzw. Δλ(n-1) und Δλn in je einem Abstand λ12, λ23, ... bzw. λ(n-1)n voneinander angeordnet sind, wobei die Abstände λ12, λ23, ... , λ(n-1)n zueinander gleich und/oder voneinander verschieden gewählt sein können.

Die in der Figur 2b dargestellte Filtercharakteristik C2 der Gitter 130 für den Durchgangsfall weist bei der gitterspezifischen Bragg-Wellenlänge λ1, λ2, ... bzw. λn jedes Gitters 130 je ein Minimum m1, m2, ... bzw. mn auf, links und rechts von dem die Filtercharakteristik C2 innerhalb je eines schmalen Wellenlängenbereichs Δλ1, Δλ2 ... bzw. Δλn auf einen maximalen Wert M ansteigt. Die Filtercharakteristik C2 ist komplementär zur Filtercharakteristik C1 und kann als breitbandig bezeichnet werden.

Die Filtercharakteristik C1 bzw. C2 hängt zusammen mit den gitterspezifischen Bragg-Wellenlängen λ1, λ2, ... , λn der Bragg-Gitter 130 von der Temperatur jedes Gitters 130 ab. In den Figuren 2a und 2b ist angenommen, dass bei jedem einem Bauelement 10 zugeordneten Gitter 130 die Temperatur Ti (i = 1, 2,... , n) dieses Bauelements 10 im Normalbetrieb herrscht und dass damit die gitterspezifische Bragg-Wellenlänge dieses Gitters 130 gleich λi ist.

Ändert sich die Temperatur Ti des Bauelements 10 und damit des diesem Bauelement 10 zugeordneten Gitters 130 aus irgendeinem Grund auf einen anderen Wert Ti', verschiebt sich die gitterspezifische Bragg-Wellenlänge λi dieses Gitters 130 auf einen anderen Wert λi', wobei sich auch der schmale Wellenlängenbereich Δλi und das Maximum Mi bzw. Minimum mi so verschieben, dass sie jetzt bei λi' liegen.

Dies gilt für jedes Bauelement 10 und das diesem Element 10 zugeordnete Bragg-Gitter 130 im Einzelnen und unabhängig von den übrigen Bauelementen 10 und Bragg-Gittern 130.

In den Figuren 2a und 2b ist eine solche temperaturbedingte Änderung der Filtercharakteristik C1 bzw. C2 speziell und ohne Beschränkung der Allgemeinheit für beispielsweise i = 1 gestrichelt angedeutet, wobei überdies angenommen ist, dass sich das Bauelement 10 mit der Betriebstemperatur T1 und das diesem Element zugeordnete Gitter 130 von dieser Temperatur T1 auf einen höheren Wert T1' erwärmt und sich dadurch bedingt die gitterspezifische Bragg-Wellenlänge λ1 dieses Gitters 130 beispielsweise nach rechts auf einen ebenfalls höheren Wert λ1' verschoben hat.

Bei einer Abkühlung des Bauelements 10 mit der Betriebstemperatur T1 auf eine niedrigere Temperatur T1' verschiebt sich bei diesem Beispielsfall die gitterspezifische Wellenlänge λ1 nach links auf einen niedrigere Wellenlänge λ1'.

Abhängig von der Beschaffenheit der Gitter 130 und/oder dem Material des optischen Leiters 13 kann es auch sein, dass die Bragg-Wellenlänge λi eines Gitters 130 bei zunehmender Temperatur Ti abnimmt und bei abnehmender Temperatur Ti zunimmt.

Für eine Messung der Bragg-Wellenlänge λi eines Gitters 130 kann sowohl die Filtercharakteristik C1 als auch C2 verwendet werden. Vorzugsweise wird entweder nur die Filtercharakteristik C1 oder die Filtercharakteristik C2 verwendet, wobei in der Regel der Filtercharakteristik C1 der Vorzug gegeben wird.

In erster Näherung gilt für jedes i = 1, 2, ..., n, dass Δλi = |λi-λi'| je nach Beschaffenheit des betreffenden Gitters 130 und/oder Material des optischen Leiters 13 proportional zu ΔTi = |Ti-Ti'| oder 1/ΔTi ist.

An die Gitterkonstanten a₁, a₂, ..., an der einzelnen Gitter 130 muß vorteilhafterweise keine hohe Präzision gestellt werden, wichtig ist nur, dass jeder Abstand λ12, λ23, ... bzw. λ(n-1)n zwischen benachbarten Bragg-Wellenlängen λ1 und λ2, λ2 und λ3, ... bzw. λ(n-1) und λ(n-1)n ausreichend groß ist, damit sich bei einer temperaturbedingten Veränderung der Bragg-Wellenlängen λ1, λ2, ... , λn die schmalen Wellenlängenbereiche Δλ1, Δλ2 ... , Δλn nicht überlappen oder gar kreuzen.

Auch an die Filtercharakteristika C1 und C2 sind keine hohen Anforderungen zu stellen, die Maxima Mi bzw. Minima mi müssen bei den gitterspezifischen Bragg-Wellenlängen λi, lediglich ausreichend ausgeprägt sein. Dennoch ist es günstig, wenn die Gitter 130 so beschaffen sind, dass bei der Filtercharakteristik C1 die Maxima Mi möglichst nahe bei 1 liegen und der minimale Wert m möglichst nahe bei 0 liegt und bei der Filtercharakteristik C2 die Minima mi möglichst nahe bei 0 liegen und der maximale Wert M möglichst nahe bei 1 liegt.

Der optische Leiter 13 ist vorzugsweise ein Wellenleiter in Form einer flexiblen Faser, in welcher die Bragg-Gitter 130 integriert sind.

Der Leiter 13 ist in einem kleinen Abstand d am jeweiligen Bauelement 10 vorbei geführt oder berührt dieses Element 10 (d.h. d = 0), wobei das diesem Element 10 zugeordnete Bragg-Gitter 130 vorzugsweise im Bereich des Bauelements 10 angeordnet ist.

Beispielsweise ist gemäß Figur 1 der Leiter 13 über einen vom Trägerkörper 11 abgekehrten flachseitigen Oberflächenabschnitt 102 eines Bauelements 10 in Form eines Halbleiterchips geführt, der mit seinem dem Trägerkörper 11 zugekehrten flachseitigen Oberflächenabschnitt 101 auf dem Substrat 110 des Trägerkörpers 11 befestigt ist.

Üblicherweise sind die Bauelemente 10 zum Schutz gegen schädliche äußere Einflüsse in eine Vergussmasse 16 eingebettet, die mit dem Trägerkörper 11 verbunden sein kann. In diese Vergussmasse 16 kann bequem auch der optische Leiter 13 eingebettet sein, so dass er automatisch befestigt und zugleich geschützt ist.

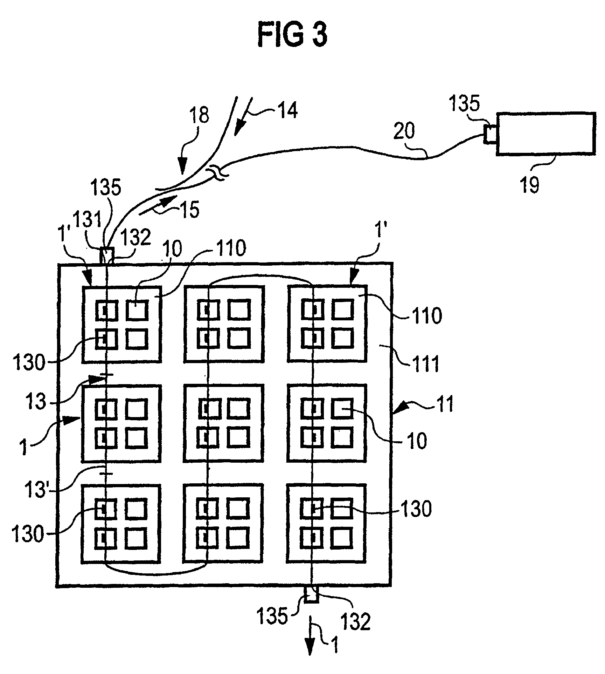

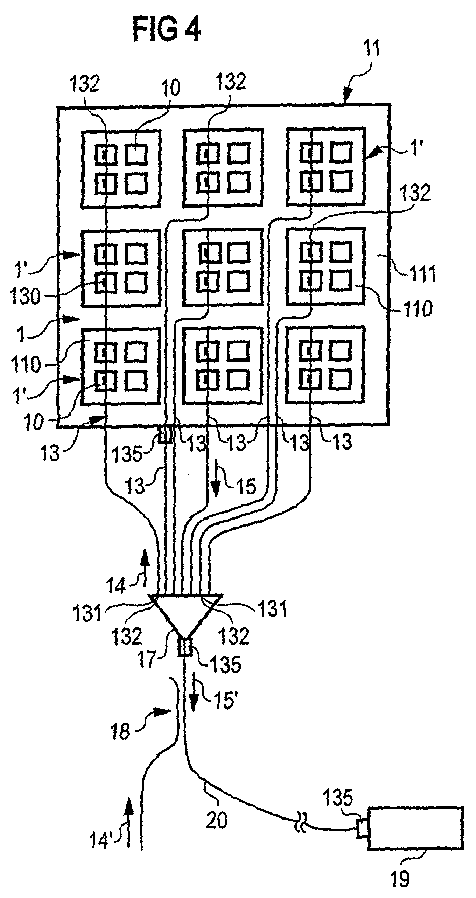

In den Figur 3 und 4 ist jeweils eine Anordnung 1 in Form eines Systems aus mehreren, speziell neun einzelnen Modulen nach Figur 1 in Draufsicht dargestellt. Beispielsweise sind die mit 1' bezeichneten Module und deren separaten Substrate 110 auf einem gemeinsamen Kühlkörper 111 angeordnet und befestigt, so dass der Trägerkörper 11 dieser Anordnung 1 aus neun Substraten 110 und einem gemeinsamen Kühlkörper 111 besteht.

Jedes dieser einzelnen Module 1' weist speziell und der Übersichtlichkeit halber je nur vier Bauelemente 10 auf, doch kann die Zahl Bauelemente 10 pro Anordnung 1 größer aber auch kleiner als vier und insbesondere auch in verschiedenen Modulen 1' unterschiedlich sein. Insbesondere können in jedem Modul 1' die Bauelemente 10 beispielsweise wesentlich unregelmäßiger über das Substrat 110 verteilt sein als es in den Figuren 3 und 4 dargestellt ist.

Bei der beispielhaften Anordnung 1 nach Figur 3 ist ein einziger, beispielsweise in Form einer flexiblen Faser ausgebildeter optischer Leiter 13 z.B. mäanderförmig durch alle neun Module 1' geführt und weist im Bereich jedes Moduls 1' Bragg-Gitter 130 mit voneinander verschiedenen gitterspezifischen Bragg-Wellenlängen auf, deren jedes so nahe bei je einem zugeordneten Bauelement 10 je eines Moduls 1 angeordnet ist, dass an diesem Bragg-Gitter 130 eine im Wesentlichen nur von diesem zugeordneten Bauelement 10 bestimmte Temperatur herrscht.

Die Module 1' der Anordnung 1 nach Figur 3 sind in Bezug auf den einzigen optischen Leiter 13 kaskadiert, d.h. hintereinandergeschaltet. Dieser Leiter 13 kann aus einem Stück bestehen oder aus mehreren, beispielsweise je zu einer Anordnung 1 gehörenden Leiterabschnitten 13' zusammengesetzt sein.

Zur bequemen Temperaturmessung kann an das Ende 132 zum Auskoppeln der von allen Gittern 130 dieses Leiters 13 kommenden Strahlung 15 aus dem Leiter 13, vorzugsweise an jedem Ende 132 des Leiters 13, ein optisches Anschlusselement 135, beispielsweise ein Faserstecker oder eine Faserbuchse, vorzugsweise jeweils standardisiert, vorgesehen sein.

An das Ende 132 zum Auskoppeln der aus den von sämtlichen Gittern 130 des Leiters 13 reflektierten Strahlungsanteilen bestehenden Strahlung 15, das vorzugsweise zugleich das Ende 131 zum Einkoppeln einer den Gittern 130 dieses Leiters 13 zuzuführenden Strahlung 14 in den Leiter 13 bildet, ist eine Einrichtung 19 zur Messung der in dieser Strahlung 15 enthaltenen gitterspezifischen Bragg-Wellenlänge jedes Gitters 130 des Leiters 13 ankoppelbar, beispielsweise durch einen Faserstecker 135.

Bei der beispielhaften Anordnung 1 nach Figur 4 ist jedem von sechs der insgesamt neun Module 1' je ein eigener optischer Leiter 13 zugeordnet, der Bragg-Gitter 130 mit voneinander verschiedenen gitterspezifischen Bragg-Wellenlängen aufweist, deren jedes so nahe bei je einem zugeordneten Bauelement 10 dieses Moduls 1', dem dieser Leiter 13 zugeordnet ist, angeordnet ist, dass an diesem Bragg-Gitter 130 eine im Wesentlichen nur von diesem zugeordneten Bauelement 10 bestimmte Temperatur herrscht.

Diese sechs Module 1' der Anordnung 1 nach Figur 4 sind in Bezug auf diese moduleigenen Leiter 13 parallel geschaltet.

Generell kann es bei einer erfindungsgemäßen Anordnung 1 so sein, dass zwei oder mehrere Gruppen Bauelemente 10, beispielsweise Module 1', im vorstehenden Sinn parallel geschaltet sind und eine oder mehrere Gruppen Bauelemente 10, beispielsweise Module 1' im vorstehenden Sinn in Serie geschaltet sind, was bedeutet, dass Hintereinanderschaltung und Parallelschaltung von Gruppen Bauelementen 10 durch optische Leiter 13 kombiniert sind. Eine Gruppe Bauelemente 10 weist dabei wenigstens ein Bauelement 10, in der Regel zwei oder mehrere Bauelemente 10 auf.

Bei der Anordnung 1 nach Figur 4 sind speziell die erwähnten sechs Module 1' parallel und die übrigen drei am weitesten links liegenden und zudem untereinander angeordneten Module 1' hintereinandergeschaltet.

Bei hintereinander geschalteten Gruppen von Bauelementen 10, insbesondere Modulen 1', ist es notwendig, dass die gitterspezifischen Bragg-Wellenlängen der Bragg-Gitter 130 nicht nur innerhalb jeder Gruppe, sondern auch von Gruppe zu Gruppe voneinander verschieden sind. Bei zueinander parallel geschaltet Gruppen von Bauelementen 10 gilt diese Einschränkung nicht, da bei diesen Gruppen Messungen der gitterspezifischen Bragg-Wellenlängen der Bauelemente von Gruppe zu Gruppe voneinander getrennt durchgeführt werden können.

Diese Einschränkung gilt allerdings bei parallel und/oder hintereinandergeschalteten Gruppen dann, wenn die von den Gittern 130 jedes Leiters 13 kommenden optischen Strahlungen 15 beispielsweise in einem optischen Koppler 17 zusammenführt und danach gemeinsam ausgewertet werden.

In der Figur 4 ist speziell und ohne Beschränkung der Allgemeinheit angenommen, dass die Strahlung 15 jedes Leiters 13 aus den von den Gittern 130 dieses Leiters 13 reflektierten Strahlungsanteilen besteht. Diese Strahlungen 15 der verschiedenen Leiter 13 werden z.B. im Koppler 17 zu einer Strahlung 15' zusammengeführt, die vom Koppler 17 zu einer Weiterverarbeitung abgegeben wird.

Die Enden 132 der Leiter 13 zum Auskoppeln der Strahlung 15 jedes Leiters 13, die aus den durch die Gitter 130 dieses Leiters 13 hindurchgegangenen Strahlungsanteilen besteht, werden hier nicht benutzt, obgleich auch diese Strahlungen 15 durch einen nicht dargestellten Koppler zu einer Strahlung zusammengeführt werden könnten, die von diesem Koppler zu einer Weiterverarbeitung abgegeben wird.

Zur Weiterverarbeitung der vom Koppler 17 abgegebenen Strahlung 15' ist eine Einrichtung 19 zur Messung der in den Strahlungen 15 dieser Strahlung 15' enthaltenen gitterspezifischen Bragg-Wellenlängen jedes Gitters 130 der verschiedenen Leiter 13 an den Koppler 17 ankoppelbar, beispielsweise durch einen Faserstecker 135 dieses Kopplers 17.

Generell kann eine Einrichtung 19 zur Messung der in der Strahlung 15 enthaltenen gitterspezifischen Bragg-Wellenlänge jedes Gitters 130 unmittelbar an der zu überwachenden Anordnung 1 oder am zu überwachenden System oder alternativ auch in einiger Entfernung angeordnet sein, die beispielsweise 0 bis 10 km und mehr betragen kann.

Bei unmittelbarer Anordnung an der zu überwachenden Anordnung 1 kann die Einrichtung 19 direkt, beispielsweise über einen Faserstecker 135 mit der Anordnung 1 verbunden sein.

Bei den speziellen Anordnungen 1 nach den Figuren 3 und 4 ist andererseits beispielsweise angenommen, dass die Einrichtung 19 in einer Entfernung von der Anordnung 1 angeordnet ist. Dazu ist das Betreffende Ende 132 des Leiters 13 bzw. der Koppler 17 durch einen zusätzlichen optischen Leiter 20 mit der Einrichtung 19 verbunden, der die Strahlung 15 bzw. 15' von der Anordnung 1 zur Einrichtung 19 überträgt. Vorzugsweise ist der Leiter 20 eine Faser, die einerseits durch einen Faserstecker 135 an das System und andererseits durch einen Faserstecker 135 an die Einrichtung 19 anschließbar ist.

Im Fall der speziellen Anordnung 1 nach Figur 3 ist die Faser 20 an einen am Ende 132 des Leiters 13 vorhandenen Faserstecker 135 mit diesem System verbunden. Im Fall der speziellen Anordnung 1 nach Figur 4 ist die Faser 20 an einen am Koppler 17 vorhandenen Faserstecker 135 mit diesem System verbunden. Der Koppler 17 ist so ausgebildet, dass er nicht nur die aus den Enden 132 der verschiedenen Leiter 13 ausgekoppelten Strahlungen 15 an seinem Faserstecker 135 zur Strahlung 15' zusammenführt, sondern dass er eine diesem Stecker 135 zugeführte Strahlung 14' leistungsmäßig in Strahlungen 14 aufteilt, deren jede dem Ende 132 je eines der verschiedenen Leiter 13 zur Einkopplung in diesen Leiter 13 zugeführt ist.

Da bei den Anordnungen 1 nach den Figuren 3 und 4 angenommen ist, dass das Ende 132 des bzw. der Leiter 13 jeweils zugleich das Ende 131 zum Einkoppeln der Strahlung 14 in den Leiter 13 bildet, ist in jedem Fall beispielsweise ein optischer Koppler 18 vorhanden, über den im Fall der Figur 3 die Strahlung 14 in den Leiter 20 eingekoppelt und in diesem Leiter 20 dem Ende 131 des Leiters 13 zugeführt wird, und im Fall der Figur 4 die Strahlung 14' in den Leiter 20 eingekoppelt und in diesem Leiter 20 dem Koppler 17, speziell dem Faserstecker 135 dieses Kopplers 17 zugeführt wird.

Die Einrichtung 19 ist vorzugsweise Bestandteil eines umfassenderen Geräts, das weitere nicht dargestellte Komponenten enthalten kann, die beispielsweise eine Zuordnung der richtigen Temperatur eines Bauelements 10 zu der an diesem Element 10 gemessenen Bragg-Wellenlänge und/oder Erzeugung anderer dieses Bauelement 10 betreffenden Informationen aus dieser gemessenen Wellenlänge ermöglichen.

Es sei darauf hingewiesen, dass nicht in jedem Fall jedes Bauelement 10 einer Anordnung 1 überwacht werden muss. Beispielsweise wird bei den in den Figuren 3 und 4 dargestellten Anordnungen bei jedem Modul 1' jeweils nur ein Teil der Bauelemente 10, speziell nur zwei der vier Bauelemente 10 dieses Moduls 1' durch ein in die Nähe gebrachtes Bragg-Gitter 130 eines optischen Leiters 13 überwacht. Andererseits ist es kein Problem, jedes Bauelement 10 einer Anordnung 1, beispielsweise eines, mehrerer oder jedes gegebenen Moduls 1' dieser Anordnung 1 hinsichtlich der Temperatur oder anderer physikalischer Größen zu überwachen.

Bei den bisher beschriebenen Beispielen der erfindungsgemäßen Anordnung 1 müssen die verschiedenen Bauelementen 10 zugeordneten Bragg-Gitter 130 des optischen Leiters 13 voneinander verschiedene gitterspezifische Bragg-Wellenlängen aufweisen, um die Gitter 130 und damit die zugeordneten Bauelemente 10 bei einer verteilten Temperaturmessung unterscheiden zu können.

Wenn bei einer Anordnung 1 aus elektronischen Bauelementen 10, die auf einem Trägerkörper 11 gehaltert sind, die Anordnung 1 einen optischen Leiter 13 mit Bragg-Gittern 130 aufweist, der zwischen einem Paar Bragg-Gittern 130 eine so große optische Länge n₀·ΔL aufweist, dass die Laufzeit Δt einer sich in diesem Leiter 13 zwischen diesen beiden Gittern 130 ausbreitenden optischen Strahlung messbar ist, kann der von einem der beiden Gitter 130 kommende und zur Strahlung 15 beitragende Strahlungsanteil zeitlich von dem vom anderen Gitter 130 kommende und zur Strahlung 15 beitragende Strahlungsanteil getrennt werden, da einer dieser beiden Strahlungsanteile gegenüber dem anderen um die messbare Laufzeit Δt verzögert am Ende 132 zum Auskoppeln der optischen Strahlung 15 aus dem Leiter 13 erscheint.

Es ist in diesem Fall also möglich, zwei Bragg-Gitter 130 nicht nur durch ihre gitterspezifischen Bragg-Wellenlängen, sondern zusätzlich durch die Verzögerung Δt der von diesen beiden Gittern 130 kommenden und durch diese gitterspezifischen Bragg-Wellenlängen gekennzeichneten Strahlungsanteile zu identifizieren.

Da zur Unterscheidung der Bragg-Gitter 130 nur ein Unterscheidungsmerkmal erforderlich ist, können die gitterspezifischen Bragg-Wellenlängen jeweils eines Paares solcher Gitter 130 zueinander gleich gewählt werden.

Werden im Extremfall ausschließlich solche Paare Gitter 130 verwendet und für die verschiedenen Paare Gitter 130 zueinander verschiedene Laufzeiten bzw. Verzögerungen Δt gewählt, können die Gitter 130 all dieser Paare so beschaffen sein, dass sie ein und dieselbe gitterspezifische Bragg-Wellenlänge aufweisen. In der Regel wird eine erfindungsgemäße Anordnung 1 jedoch so ausgebildet sein, dass sie zwei oder mehrere Gitter mit voneinander verschiedenen Bragg-Wellenlängen und ein oder mehrere Paare Gitter mit zumindest jeweils gleicher Bragg-Wellenlänge aufweist.

In jedem Fall besteht der Vorteil, dass bei einer solchen Anordnung die Anzahl voneinander verschiedener gitterspezifischer Bragg-Wellenlängen und damit auch voneinander verschiedener Gitterkonstanten erheblich reduziert werden kann, im Extremfall auf eine einzige Bragg-Wellenlänge für alle Paare Gitter 130.

Bei jedem solchen Paar Gitter 130 mit zueinander gleicher gitterspezifischer Bragg-Wellenlänge ist es dann zweckmäßig, wenn zumindest das erste Gitter 130, auf das die im optischen Leiter 13 zugeführte Strahlung 14 zuerst trifft, so ausgeführt ist, dass dieses Gitter 130 bei der gitterspezifischen Bragg-Wellenlänge nur einen Bruchteil der optischen Leistung der Strahlung 14 reflektiert, damit auch ein von null verschiedener Bruchteil dieser Leistung durch dieses Gitter 130 hindurchgeht und das zweite Gitter 130 erreicht, wo er reflektiert werden kann. In Bezug auf die den Reflexionsfall betreffende Figur 2a bedeutet dies, dass zumindest beim ersten Gitter 130 das bei der gitterspezifischen Bragg-Wellenlänge dieses Gitters 130 liegende Maximum von I/I0 deutlich kleiner als 1 sein sollte.

Die optische Länge n₀·ΔL zwischen zwei Bragg-Gittern 130 ist definiert durch das Produkt aus dem effektiven Brechungsindex n₀ des optischen Leiters 13 mal dessen geometrischer Länge ΔL zwischen diesen beiden Gittern 130.

ΔL sollte zumindest in der Größenordnung eines Meters liegen und kommt innerhalb einer Anordnung 1 in Form eines einzigen Moduls 1' kaum vor, sondern in der Regel nur in größeren Anordnungen 1, die aus mehreren Modulen 1' zusammengesetzt sind.

Bei ΔL = 2m beispielsweise beträgt die Laufzeit Δt und damit die relative Verzögerung etwa 7 Nanosekunden und ist zur Unterscheidung zweier in diesem Abstand ΔL voneinander angeordneten Gitter 130 ausreichend. Je größer ΔL ist, desto geringer werden die Anforderungen an eine Einrichtung zur Messung der relativen Verzögerung. Bei ΔL in der Größenordnung eines Kilometers, beispielsweise ΔL = einige Kilometer, liegt die Verzögerung in der Größenordnung Mikrosekunde.

Günstig ist die Verwendung einer schmalbandigen abstimmbaren Strahlungsquelle zur Erzeugung der in den Leiter 13 einzukoppelnden Strahlung 14.

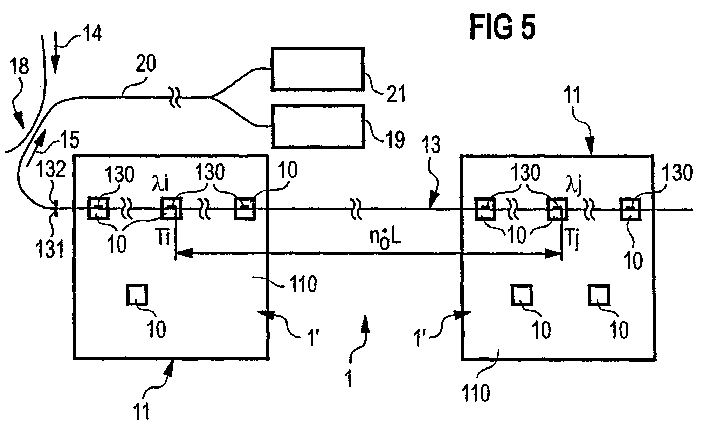

In der Figur 5 ist eine Anordnung 1 mit einem optischen Leiter 13 beispielhaft dargestellt, der wenigstens ein Paar Bragg-Gitter 130 mit je einer Bragg-Wellenlänge λi und λj aufweist, zwischen dem die optische Länge n₀·ΔL des Leiters 13 so groß ist, dass auf dieser Länge die erwähnte Laufzeit Δt messbar ist.

Beispielsweise weist die Anordnung 1 nach Figur 5 Module 1' auf, die durch den Leiter 13 hintereinander geschaltet sind, wobei jedes Modul 1' zwei oder mehrere Bauelemente 10 aufweist, deren jedem je ein Bragg-Gitter 130 mit je einer gitterspezifischen Bragg-Wellenlänge zugeordnet ist, das jeweils so nahe beim zugeordneten Bauelement 10 angeordnet ist, dass an diesem Gitter 130 eine im Wesentlichen nur von diesem zugeordneten Bauelement 10 bestimmte Temperatur herrscht.

Das Paar Gitter 130, 130 der Anordnung 1 nach Figur 5 besteht beispielsweise aus dem Gitter 130 mit der Bragg-Wellenlänge λi, das dem Bauelement 10 der Temperatur Ti eines dargestellten Moduls 1' zugeordnet ist, und dem Gitter 130 mit der Bragg-Wellenlänge λj, das dem Bauelement 10 der Temperatur Tj eines anderen dargestellten Moduls 1' zugeordnet ist. Zwischen diesen beiden Gittern 130 hat der Leiter 13 die erwähnte optische Länge n₀·ΔL, die so groß ist, dass auf dieser Länge n₀·ΔL die Laufzeit Δt der im optischen Leiter 13 geführten optischen Strahlung 14 und/oder 15 messbar ist.

Der Leiter 13 weist ein Ende 131 zum Einkoppeln einer die gitterspezifischen Bragg-Wellenlängen jedes Bragg-Gitters 130 der Anordnung enthaltenden optischen Strahlung 14, die nach dem Einkoppeln im optischen Leiter 13 zu diesen Gittern 130 geführt ist, sowie ein Ende 132 zum Auskoppeln einer von jedem dieser Gitter 130 kommenden und im optischen Leiter 13 geführten optischen Strahlung 15 auf. Das Ende 131 ist beispielsweise zugleich das Ende 132.

An das Ende 132 des Leiters 13 ist eine Einrichtung 21 zur Messung der Verzögerung Δt der von einem Gitter 130 des Paares kommenden und im optischen Leiter 13 geführten Strahlungsanteils gegenüber einem vom anderen Gitter 130 des Paares kommenden und im optischen Leiter geführten Strahlungsanteils angekoppelt.

Der vom einen Gitter 130 des Paares kommende Strahlungsanteil ist durch die gitterspezifische Bragg-Wellenlänge λi dieses Gitters 130 und der vom anderen Gitter 130 des Paares kommende Strahlungsanteil ist durch die gitterspezifische Bragg-Wellenlänge λj dieses anderen Gitters 130 gekennzeichnet.

Es kann vorteilhafterweise λi = λj gewählt werden und die Gitter 130, 130 des Paares und die beiden Bauelemente 10, denen diese Gitter 130 zugeordnet sind, können allein durch die erwähnte Verzögerung Δt unterschieden werden.

Weist die Anordnung 1 nach Figur 5 zwei oder mehr solche Paare Gitter 130, 130 auf, die durch eine messbare Verzögerung Δt unterschieden werden können, ist es zumindest in dem Fall, dass diese Verzögerungen Δt von Paar Gitter 130, 130 nicht unterscheidungskräftig genug sind, zweckmäßig, die Bragg-Wellenlänge von Paar Gitter 130, 130 zu Paar Gitter 130, 130 verschieden zu wählen, so dass die einzelnen Paare durch ihre Bragg-Wellenlänge zu unterscheiden sind.

An das Ende 132 ist nicht zuletzt aus diesem Grund die Einrichtung 19 zur Messung der in der Strahlung 15 enthaltenen gitterspezifischen Bragg-Wellenlänge jedes Gitters 130 angekoppelt.

## Patentansprüche

1. Anordnung (1) aus elektronischen Bauelementen (10), die auf einem Trägerkörper (11) gehaltert sind, mit:
- Einem optischen Leiter (13),
- der zwei oder mehrere optische Bragg-Gitter (130) mit voneinander verschiedenen gitterspezifischen Bragg-Wellenlängen (λ1, λ2, ..., λn) aufweist, deren jedes so nahe bei je einem zugeordneten der Bauelemente (10) angeordnet ist, dass an diesem Bragg-Gitter (130) eine im Wesentlichen nur von diesem zugeordneten Bauelement (10) bestimmte Temperatur (T1, T2, ..., Tn) herrscht,
- der ein Ende (131) zum Einkoppeln einer die verschiedenen gitterspezifischen Bragg-Wellenlängen (λ1, λ2, ..., λn) dieser Bragg-Gitter (130) enthaltenden optischen Strahlung (14) in den optischen Leiter (13) aufweist, die nach dem Einkoppeln im optischen Leiter (13) zu diesen Gittern (130) geführt ist, und
- der ein Ende (132) zum Auskoppeln einer von jedem der Gitter (130) kommenden und im optischen Leiter (13) geführten optischen Strahlung (15) aufweist.

2. Anordnung (1) nach Anspruch 1, mit einem elektronischen Bauelement (10) in Form eines Leistungshalbleiter-Bauelements.

3. Anordnung (1) nach Anspruch 1 oder 2, wobei der optische Leiter (13) einen Wellenleiter aufweist.

4. Anordnung (1) nach einem der vorhergehenden Ansprüche, wobei der optische Leiter (13) eine Faser aufweist.

5. Anordnung (1) nach einem der vorhergehenden Ansprüche, wobei ein Bragg-Gitter (130) in den optischen Leiter (13) integriert ist.

6. Anordnung (1) nach einem der vorhergehenden Ansprüche, wobei der optische Leiter (13) in einer mit den Bauelementen (10) und/oder dem Trägerkörper (11) verbundenen Vergussmasse (16) eingebettet ist.

7. Anordnung (1) nach einem der vorhergehenden Ansprüche, wobei an das Ende (132) zum Auskoppeln einer von jedem der Gitter (130) eines optischen Leiters (13) kommenden und in diesem optischen Leiter (13) geführten optischen Strahlung (15) eine Einrichtung (19) zur Messung der in dieser Strahlung (15) enthaltenen gitterspezifischen Bragg-Wellenlänge (λ1, λ2, ...bzw. λn) jedes Gitters (130) ankoppelbar ist.

8. Anordnung (1) aus elektronischen Bauelementen (10), die auf einem Trägerkörper (11) gehaltert sind, insbesondere Anordnung nach einem der vorhergehenden Ansprüche, mit:
- Einem optischen Leiter (13),
- der zumindest ein Paar optischer Bragg-Gitter (130, 130) mit je einer gitterspezifischen Bragg-Wellenlänge (λi, λj) und mit einer so großen optischen Länge (n₀·ΔL) des Leiters (13) zwischen diesem Paar Gitter (130, 130) aufweist, dass die Laufzeit (Δt) einer sich im Leiter (13) von einem Gitter (130) des Paares zum anderen Gitter (130) des Paares ausbreitenden optischen Strahlung (14, 15) messbar ist, wobei
- jedes Gitter (130) jedes Paares so nahe bei je einem zugeordneten elektronischen Bauelement (10) angeordnet ist, dass an diesem Gitter (130) eine im Wesentlichen nur von diesem zugeordneten Bauelement (10) bestimmte Temperatur (Ti, Tj) herrscht, wobei
- der optische Leiter (13)
- ein Ende (131) zum Einkoppeln einer die gitterspezifische Bragg-Wellenlänge (λi, λj) jedes Bragg-Gitters (130) jedes Paares enthaltenden optischen Strahlung (14) in den optischen Leiter (13) aufweist, die nach dem Einkoppeln im optischen Leiter (13) zu jedem der Gitter (130) geführt ist, und
- ein Ende (132) zum Auskoppeln einer von jedem Gitter (130) jedes Paares kommenden und im optischen Leiter (13) geführten optischen Strahlung (15) aufweist.

9. Anordnung nach Anspruch 8, wobei die Bragg-Wellenlängen (λi, λj) eines Paares Gitter (130) im Wesentlichen zueinander gleich sind.

10. Anordnung nach Anspruch 9 oder 10, wobei an das Ende (132) des optischen Leiters (13), das zum Auskoppeln einer von jedem der Gitter (130) dieses Leiters (13) kommenden und in diesem optischen Leiter (13) geführten optischen Strahlung (15) dient, eine Einrichtung (21) zur Messung der Verzögerung eines von einem Gitter (130) des Paares kommenden und im optischen Leiter (13) geführten Strahlungsanteils gegenüber einem vom anderen Gitter (130) des Paares kommenden und im optischen Leiter geführten Strahlungsanteils ankoppelbar ist.

## Claims

1. Arrangement (1) of electronic components (10), which are held on a carrier body (11), having:
- an optical conductor (13),
- which has two or more optical Bragg gratings (130) with grating-specific Bragg wavelengths (λ1, λ2, ..., λn) differing from one another, of which each is respectively arranged so close to an assigned one of the components (10) that a temperature (T1, T2, ..., Tn) determined by this assigned component (10) substantially prevails at this Bragg grating (130),
- which has an end (131) for coupling into the optical conductor (13), an optical radiation (14) which includes the various grating-specific Bragg wavelengths (λ1, λ2, ..., λn) of these Bragg gratings (130) and is guided to these gratings (130) after being coupled into the optical conductor (13), and
- which has an end (132) for coupling out an optical radiation (15) coming from each of the gratings (130) and guided in the optical conductor (13).

2. Arrangement (1) according to Claim 1, having an electronic component (10) in the form of a power semiconductor component.

3. Arrangement (1) according to Claim 1 or 2, in which the optical conductor (13) has a waveguide.

4. Arrangement (1) according to one of the preceding claims, in which the optical conductor (13) has a fibre.

5. Arrangement (1) according to one of the preceding claims, in which a Bragg grating (130) is integrated in the optical conductor (13).

6. Arrangement (1) as claimed in one of the preceding claims, in which the optical conductor (13) is embedded in a sealing compound (16) connected to the components (10) and/or the carrier body (11).

7. Arrangement (1) according to one of the preceding claims, in which it is possible to couple to the end (132) for coupling out a radiation (15) coming from each of the gratings (130) of an optical conductor (13) and guided in this optical conductor (13), a device (19) for measuring the grating-specific Bragg wavelengths (λ1, λ2, ... or λn), included in this radiation (15), of each grating (130).

8. Arrangement (1) of electronic components (10) which are held on a carrier body (11), in particular an arrangement according to one of the preceding claims, having:
- an optical conductor (13),
- which has at least one pair of optical Bragg gratings (130, 130) with one grating-specific Bragg wavelength (λi, λj) each, and with so large an optical length (n₀·ΔL) of the conductor (13) between this pair of gratings (130, 130) that the transient time (Δt) of an optical radiation (14, 15) propagating in the conductor (13) from one grating (130) of the pair, to the other grating (130) of the pair can be measured, in which
- each grating (130) of each pair is arranged so close to one assigned electronic component (10) each that a temperature (Ti, Tj) determined substantially only by this assigned component (10) prevails at this grating (130), wherein
- the optical conductor (13)
- has an end (131) for coupling into the optical conductor (13) an optical radiation (14) which includes the grating-specific Bragg wavelength (λi, λj) of each Bragg grating (130) of each pair, and is guided to each of the gratings (130) after being coupled into the optical conductor (13), and
- has an end (132) for coupling out an optical radiation (15) coming from each grating (130) of each pair and guided in the optical conductor (13).

9. Arrangement according to Claim 8, in which the Bragg wavelengths (λi, λj) of a pair of gratings (130) are substantially equal to one another.

10. Arrangement according to Claim 9 or 10, in which it is possible to couple to the end (132) of the optical conductor (13) which serves to couple out an optical radiation (15) coming from each of the gratings (130) of this conductor (13) and guided in this optical conductor (13) a device (21) for measuring the delay of a radiation component coming from a grating (130) of the pair and guided in the optical conductor (13) in relation to a radiation component coming from the other grating (130) of the pair and guided in the optical conductor.

## Revendications

1. Dispositif (1) constitué de composants électroniques (10), qui sont maintenus sur un corps de support (11),
**caractérisée par**
un conducteur optique (13), qui présente
- deux ou plusieurs réseaux optiques de Bragg (130) comprenant des longueurs d'ondes de Bragg spécifiques de réseau (λ1, λ2,..., λn) et différentes les unes des autres, dont chacun est disposé respectivement à proximité d'un des composants (10) associés de telle sorte qu'une température (T1, T2, ... Tn), qui n'est déterminée essentiellement que par ce composant (10) associé, domine sur ce réseau de Bragg (130),
- une extrémité (131) pour introduire dans le conducteur optique (13) un rayonnement optique (14) contenant les différentes longueurs d'ondes de Bragg spécifiques de réseau (λ1, λ2,..., λn) de ce réseau de Bragg (130), lequel rayonnement est dirigé vers ces réseaux (130) après l'accouplement dans le conducteur optique (13), et
- une extrémité (132) pour émettre un rayonnement optique (15) provenant de chacun des réseaux (130) et dirigé dans le conducteur optique (13).

2. Dispositif (1) selon la revendication 1,
**caractérisé par**
un composant électronique (10) sous la forme d'un composant semiconducteur de puissance.

3. Dispositif (1) selon la revendication 1 ou 2,
**caractérisé en ce que**
le conducteur optique (13) présente un guide d'ondes.

4. Dispositif (1) selon l'une des revendications précédentes,
**caractérisé en ce que**
le conducteur optique (13) présente une fibre.

5. Dispositif (1) selon l'une des revendications précédentes,
**caractérisé par**
un réseau de Bragg (130) intégré dans le conducteur optique (13).

6. Dispositif (1) selon l'une des revendications précédentes,
**caractérisé en ce que**
le conducteur optique (13) est inclus dans une masse de coulage (16) reliée aux composants (10) et/ou au corps de support (11).

7. Dispositif (1) selon l'une des revendications précédentes,
**caractérisé en ce que**
sur l'extrémité (132) pour émettre un rayonnement optique (15) provenant de chacun des réseaux (130) d'un conducteur optique (13) et dirigé dans ce conducteur optique (13), un dispositif (19) peut être connecté pour mesurer les longueurs d'ondes de Bragg spécifiques de réseau (λ1, λ2,..., λn) de chaque réseau (130) contenues dans ce rayonnement (15).

8. Dispositif (1) constitué de composants électroniques (10) qui sont maintenus sur un corps de support (11), notamment un dispositif selon l'une des revendications précédentes, comprenant :
**caractérisé en ce que**
un conducteur optique (13) présente :
- au moins une paire de réseaux optiques de Bragg (130, 130) comprenant chacun une longueur d'ondes de Bragg spécifique de réseau (λi, λj), avec entre cette paire de réseaux (130, 130) une longueur optique (n₀ΔL) du conducteur (13) dont la longueur est telle que mesurer le temps de propagation (Δt) d'un rayonnement optique (14, 15) se propageant dans le conducteur (13) peut être mesuré depuis un réseau (130) de la paire jusqu'à l'autre réseau (130) de la paire,
- chaque réseau (130) de chaque paire est respectivement disposé à proximité d'un composant électronique (10) associé de telle sorte qu'une température (Ti, Tj), qui n'est déterminée essentiellement que par ce composant (10) associé, domine sur ce réseau (130), et
le conducteur optique (13) présente
- une extrémité (131) pour introduire dans le conducteur optique (13) un rayonnement optique (14) contenant la longueur d'ondes de Bragg spécifique de réseau (λi, λj) de chaque réseau de Bragg (130) de chaque paire, lequel rayonnement est dirigé vers chacun des réseaux (130) après son introduction dans le conducteur optique (13), et
- une extrémité (132) pour émettre un rayonnement optique (15) provenant de chaque réseau (130) de chaque paire et dirigé dans le conducteur optique (13).

9. Dispositif selon la revendication 8,
**caractérisé par**
les longueurs d'ondes de Bragg (λi, λj) d'une paire de réseaux (130) essentiellement égales entre elles.

10. Dispositif selon la revendication 9 ou 10,
**caractérisé en ce que**
contre l'extrémité (132) du conducteur optique (13), qui sert à émettre un rayonnement optique (15) provenant de chacun des réseaux (130) de ce conducteur (13) et dirigé dans ce conducteur optique (13), un dispositif (21) peut être connecté pour mesurer le temps de propagation d'une partie de rayonnement provenant d'un réseau (130) de la paire et dirigé dans le conducteur optique (13) par rapport à une partie de rayonnement provenant d'un autre réseau (130) de la paire et dirigé dans le conducteur optique.
